# EUROPEAN PATENT SPECIFICATION

(11) **EP 3 570 585 B1**
(45) Date of publication and mention of the grant of the patent: **14.10.2020**
(21) Application number: 18173247.0
(22) Date of filing: 18.05.2018
(51) Int. Cl.: H04W 24/04, H04W 48/18

(54) **STICKINESS REMOVAL OF TRANSACTIONS IN A 5G NETWORK**
KLEBRIGKEIT-ENTFERNUNG VON TRANSAKTIONEN IN EINEM 5G NETZWERK
ENLEVAGE DE L'ATTACHEMENT PERSISTENT DE TRANSACTIONS DANS UN RÉSEAU 5G

(43) Date of publication of application: 20.11.2019
(73) Proprietor: NTT DOCOMO, INC., Chiyoda-ku, Tokyo 100-6150 (JP)
(72) Inventor: MUTIKAINEN, Jari, 80687 Munich (DE); GUERZONI, Riccardo, 80687 Munich (DE)
(74) Representative: Viering, Jentschura & Partner mbB Patent- und Rechtsanwälte

(56) References cited:
- WO-A1-2018/085784
- Anonymous: "HPE vDRA Overview", , 30 June 2016 (2016-06-30), XP055490920, Retrieved from the Internet: URL:https://support.hpe.com/hpesc/public [retrieved on 2018-07-09]
- NOKIA: "Solution for stickiness removal", 3GPP DRAFT; S2-170191-STICKINESSREMOVAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Spokane, WA, USA; 20170116 - 20170120 16 January 2017 (2017-01-16), XP051216380, Retrieved from the Internet: URL:http://www.3gpp.org/ftp/Meetings_3GPP_ SYNC/SA2/Docs/ [retrieved on 2017-01-16]
- SAMSUNG ET AL: "AMF selection to solve the UE stickiness problem", 3GPP DRAFT; S2-170259-AMFSELECTIONWITHOUTSTICKYNESS_TS 23501, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Spokane, USA; 20170116 - 20170120 16 January 2017 (2017-01-16), XP051216448, Retrieved from the Internet: URL:http://www.3gpp.org/ftp/Meetings_3GPP_ SYNC/SA2/Docs/ [retrieved on 2017-01-16]
- NOKIA ET AL: "Proposals for coordination between CT3 and CT4 related to the study on service based interfaces", 3GPP DRAFT; C4-172031, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. CT WG3, no. Spokane, US; 20170403 - 20170407 3 April 2017 (2017-04-03), XP051242193, Retrieved from the Internet: URL:http://www.3gpp.org/ftp/Meetings_3GPP_ SYNC/CT4/Docs/ [retrieved on 2017-04-03]
- NOKIA ET AL: "23.742: Solution for NF reliability", 3GPP DRAFT; S2-184942-ESBA-NFSET, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Newport Beach, United States; 20180528 - 20180601 27 May 2018 (2018-05-27), XP051448458, Retrieved from the Internet: URL:http://www.3gpp.org/ftp/Meetings_3GPP_ SYNC/SA2/Docs/S2-184942-eSBA-NFSet.doc [retrieved on 2018-05-27]
- DEUTSCHE TELEKOM: "Solution proposal "SBA with stateless and unsticky services" to address key issue "Architectural support for highly reliable deployments"", 3GPP DRAFT; S2-184744 ESBA SOLUTION PROPOSAL FOR HIGHLY RELIABLE DEPLOYMENTS_DRAFT V1.0, 3RD GENERATION PARTNERSHIP PROJECT (3GPP), MOBILE COMPETENCE CENTRE ; 650, ROUTE DES LUCIOLES ; F-06921 SOPHIA- , vol. SA WG2, no. Newport Beach, USA; 20180528 - 20180601 27 May 2018 (2018-05-27), XP051448267, Retrieved from the Internet: URL:http://www.3gpp.org/ftp/Meetings_3GPP_ SYNC/SA2/Docs/S2-184744 eSBA solution proposal for highly reliable deployments_draft v1.0.doc [retrieved on 2018-05-27]

## Description

### Technical field

The present disclosure relates to network function instances and methods for performing communication transactions.

### Background

In a 5G communication system, a communication session is provided by means of network functions such as an Access and Mobility Management Function (AMF) and a Session Management Function (SMF). To provide a highly reliable 5G core network, approaches are desirable which allow dealing with the case that a network function providing a communication session becomes unavailable, e.g. due to maintenance or failure. WO 2018/085784 A1 discloses that, in 5G, stickiness of a UE-session is removed between CN and RAN or inside the RAN.

3GPP draft S2-170259, "AMF selection to solve the UE stickiness problem", XP051216448, discloses that the stickiness problem requires an appropriate routing logic to be solved.

### Summary

The invention is defined in the claims. According to one embodiment, an instance of a network function of a communication system core network is provided which is configured to perform one or more transactions with an instance of another network function of the communication system core network wherein one of the one or more transactions comprises indicating to the instance of the other network function whether the instance of the network function should be contacted to perform one or more future transactions or whether another instance of the network function may be contacted to perform the one or more future transactions. According to a further embodiment, a method for performing communication transactions is provided comprising performing one or more transactions between an instance of a first network function of a core network of a communication system and an instance of a second network function of the core network and indicating, in one of the one or more transactions to the instance of the other network function whether the instance of the network function should be contacted to perform one or more future transactions or whether another instance of the network function may be contacted to perform the one or more future transactions.

### Brief description of the drawings

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
- Figure 1: shows a radio communication system.
- Figure 2: illustrates an AMF instance requesting an SMF instance to create a context request.
- Figure 3: illustrates an AMF instance requesting an SMF instance to create a context request wherein the AMF/SMF association with the communication session can be made optionally sticky.
- Figure 4: illustrates AMF discovery according to an embodiment.
- Figure 5: illustrates SMF discovery according to an embodiment.
- Figure 6: shows a message flow diagram illustrating a procedure for initial PDU session setup.
- Figure 7: shows a message flow diagram illustrating a procedure for PDU session setup in case of a handover.
- Figure 8: shows a message flow diagram illustrating a mobility registration procedure.
- Figure 9: shows a message flow diagram illustrating a service request with a change of stickiness state.
- Figure 10: shows a diagram illustrating the relation between network function instances, service logics and service states.
- Figure 11: shows a diagram illustrating transactions between network functions.
- Figure 12: shows a diagram illustrating a transaction between network functions with multiple service logics in one network function instance.
- Figure 13: shows an instance of a network function of a communication system core network.
- Figure 14: shows a flow diagram illustrating a method for performing communication transactions.

### Detailed description

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

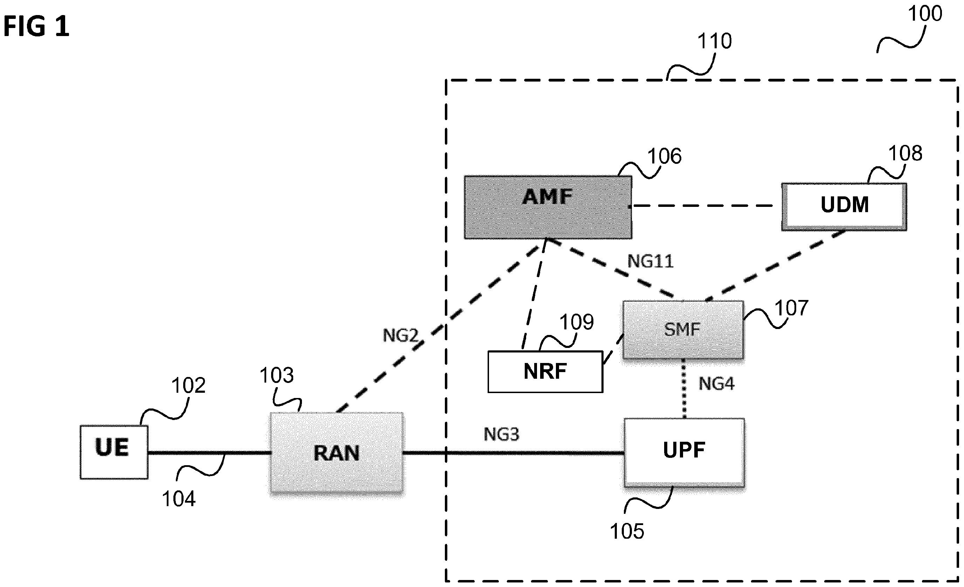

Figure 1 shows a radio communication system 100. The radio communication system 100 includes a radio communication terminal device 102 such as a UE (user equipment), a nano equipment (NE), and the like. Furthermore, the radio communication system 100 includes a radio access network 103, which may include a plurality of radio access network nodes, i.e. base stations configured to provide radio access in accordance with a 5G (Fifth Generation) radio access technology (5G New Radio). It should be noted that the radio communication system 100 may also be configured in accordance with LTE (Long Term Evolution) or another mobile radio communication standard but 5G is herein used as an example. Each radio access network node may provide a radio communication with the radio communication terminal device 102 over an air interface 104. It should be noted that the radio access network 103 may include any number of radio access network nodes.

The radio communication system 100 may further include a core network 110 including a UPF (user plane function) 105, connected to the RAN 103, an Access and Mobility Management Function (AMF) 106 connected to the RAN 103, a Session Management Function (SMF) 107, a Unified Data Management (UDM) 108 and a Network Repository Function (NRF) 109.

It should be noted that for the various network functions (NFs) like the AMF 106 and the SMF 107, multiple instances may exist in the core network 110.

In the setup procedure for a Packet Data Unit (PDU) session, the AMF 106 requests the SMF 107 to create a Session Management (SM) Context. The Create SM Context is a service exposed by the SMF 107 and is invoked by the AMF 106.

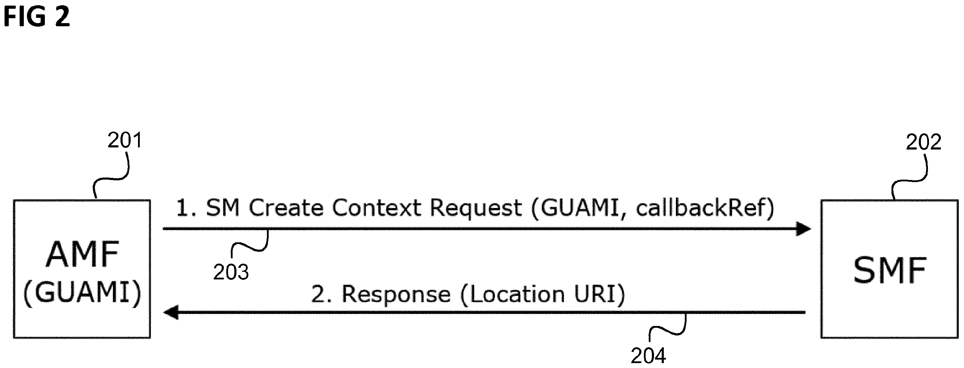

Figure 2 illustrates an AMF instance 201 requesting an SMF instance 202 to create a context request by means of an SM Create Context Request message in 203. The SMF instance 202 responds in 204.

In the request message of 203, the AMF instance 201 indicates:
- GUAMI (Globally Unique AMF Identifier) which is mandatory according to 3GPP (Third Generation Partnership Project)
- callbackRef as URI (Uniform Resource Indicator) to be used for the session status subscription (mandatory according to 3GPP). It contains the IP address of the AMF instance.
- NF Service Advertisement URI = Instance ID (optional according to 3GPP)

In the response message of 204, the SMF instance indicates:
- Address to the SM Context in SMF (Location URI) for subsequent service requests from AMF to SMF (mandatory according to 3GPP). It contains the IP address of the SMF instance.

This exchange of addresses in 201, 202 makes the association between the AMF instance 201 and the SMF instance 202 and the PDU "sticky" (in other words fixed). This means that subsequent messages (or transaction) related to the SM Context are exchanged between the same AMF instance 201 and the same SMF instance 202.

However, a key issue to implement a cloud-native and highly reliable 5GC (5G core network) can be seen in removing stickiness between 5GC network functions. In this way, reliability can for example be provided by allowing a backup for a network function instance: if there is no stickiness, i.e. a network function instance does not necessarily have to control (or continue to control) a communication session, the communication session can be controlled by a backup network function instance in case the network function instance fails or is taken out of service, e.g. for maintenance.

According to various embodiments, the association between two network functions, e.g. AMF and SMF, and a communication session is made optionally sticky in the 5GC. For example, at the creation of a Session Management context for a PDU session, an AMF instance and an SMF instance may exchange:
- identifiers of the specific AMF and SMF instances handling the session or
- identifiers of the AMF group and SMF group which the AMF and the SMF belong to.

In the second case the AMF/SMF association with the communication session is "not sticky".

They may also exchange
- an (explicit) indication of stickiness.

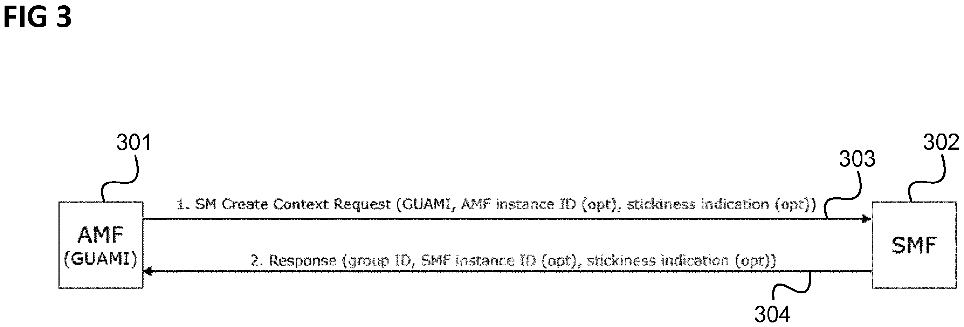

Figure 3 illustrates an AMF instance 301 requesting an SMF instance 302 to create a context request wherein the AMF/SMF association with the communication session can be made optionally sticky. This means that the association of AMF instance 301 and/or SMF instance 302 with the communication session is sticky only if explicitly indicated by the one of the network function instances 301, 302.

As in figure 2, the AMF instance 301 requests the creation of the SM context by means of an SM Create Context Request message in 303 and the SMF instance 302 responds in 304.

In the SM Create Context request message of 303 the AMF instance 301 indicates:
- GUAMI (optional). The GUAMI uniquely identifies either a set of AMF instances, each AMF identified by a different AMF address or an AMF with multiple AMF addresses
- AMF instance ID (Optional)
- Stickiness indication: indicates whether the AMF instance wishes to stay sticky for upcoming service requests in context of the communication session.

In the response message of 304 the SMF instance 302 indicates:
- SMF instance ID for subsequent service requests from AMF to SMF, i.e. for subsequent transactions between the AMF instance 301 and the SMF instance 302 (optional, only if the SMF instance wishes to stay sticky for upcoming service requests)
- SMF group ID, identifies the set of SMF instance IDs that are able to serve this PDU Session
- Stickiness indication: indicates if the SMF instance 302 wishes to stay sticky for upcoming service requests in context of the communication session.

According to various embodiments, the NRF 109 keeps the association between GUAMI (AMF only), NF service Instance ID and NF service instance IP address. In the following, approaches are discussed how to resolve Instance ID and GUAMI to NF addresses.

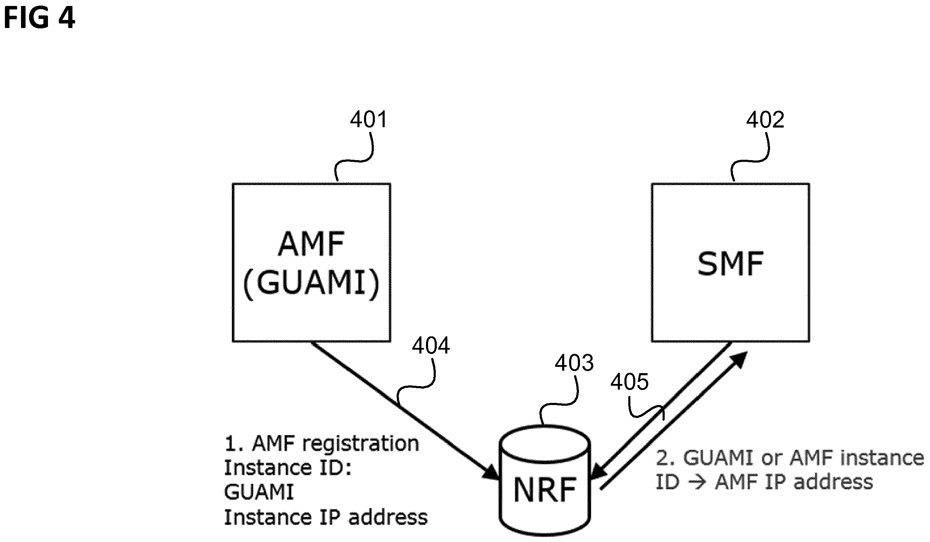

Figure 4 illustrates AMF discovery according to an embodiment.

In 404, an AMF instance 401 registers itself in the NRF 403 indicating GUAMI and AMF address.

When an SMF instance 402 needs to send a request to an AMF, the SMF instance 402 uses the NRF 403 to discover AMF instances when performing the discovery request 405:
- If the SMF instance 402 only received the GUAMI from the AMF instance in the previous transaction with an AMF, the SMF instance 402 uses the GUAMI to resolve the AMF Instance ID and IP address of the AMF instance to be used for the subsequent transaction
- If the SMF instance 402 received the GUAMI and the AMF Instance ID from AMF instance 401 in the previous transaction with an AMF, the SMF instance 402 uses the AMF Instance ID to resolve the IP address of the AMF instance 401.

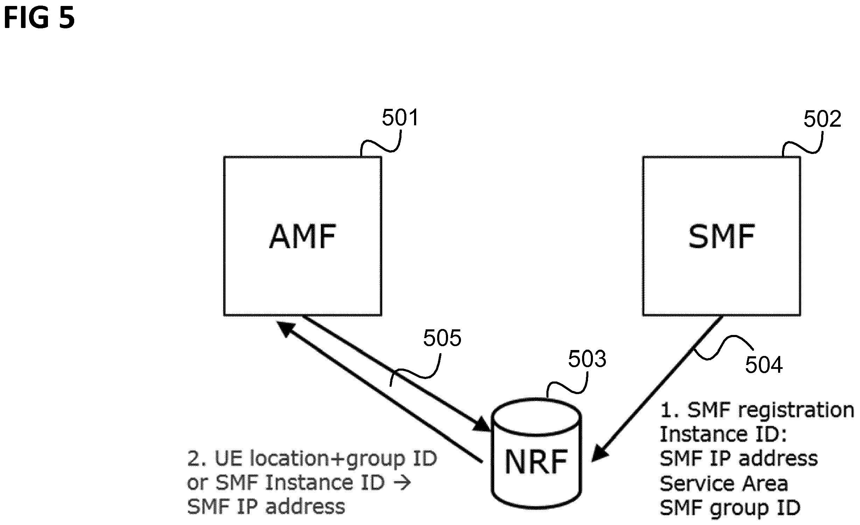

Figure 5 illustrates SMF discovery according to an embodiment.

In 504, an SMF instance 502 registers itself in the NRF 503 indicating the Service Area and SMF instance ID, SMF group ID and IP address.

When an AMF instance 501 needs to send a request to an SMF instance, the AMF instance 501 uses the NRF 503 to discover the SMF instance when performing the discovery request 505:
- If the AMF instance 501 did not receive the SMF instance ID from the SMF instance in the previous transaction with an AMF, the AMF instance 501 uses the location of the UE for which the communication session is provided and the SMF group ID to resolve the SMF Instance ID and IP address of the SMF to be use in the subsequent transaction
- If the AMF instance 501 received the SMF instance ID from the SMF instance 502, the AMF instance 501 uses the location of the UE, the SMF group ID and the SMF Instance ID to resolve the SMF IP address of the SMF instance 502.

The SMF group ID identifies a set of SMF instances that are able to serve a particular PDU Session. The SMF instance 502 registers with the NRF 503 with Service Area, IP address and Group ID. When the AMF instance 501 discovers the SMF instance 502 for an initial PDU session request, the AMF instance 501 does not have the SMF group ID. In this case, the AMF instance 501 discovers the SMF instance 502 and the IP address based on the UE location. The SMF instance 502 may respond either with SMF instance ID or group ID. The AMF instance 501 stores this identity with the PDU Session ID, and uses it for upcoming requests.

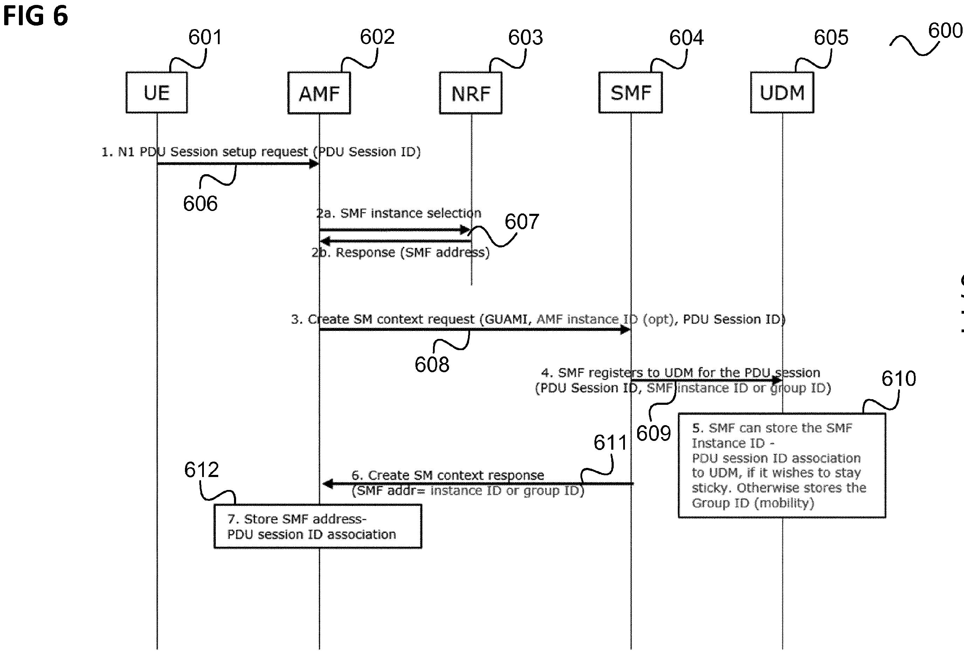

Figure 6 shows a message flow diagram 600 illustrating a procedure for initial PDU session setup (session establishment).

The message flow takes place between a UE 601, an AMF instance 602, an NRF 603, an SMF instance 604 and an UDM 605.

In 606, the UE 601 sends a PDU Session setup request to the AMF instance 602.

In 607, the AMF instance 602 performs an SMF instance selection by means of the NRF 603 which provides the address of the SMF instance 604.

In 608, the AMF instance 602 sends a create SM context request to the SMF instance 604. In this message, the AMF instance 602 may indicate the AMF instance ID to the SMF 604 if it wants its association with the PDU session to be sticky.

In 609, the SMF instance 604 registers with the UDM 605 for the PDU session. The SMF instance 604 may provide the SMF instance ID if it wants its association with the PDU session to be sticky or the SMF group ID if it does not want its association with the PDU session to be sticky.

In 610, the UDM stores the association between the PDU session ID and the SMF instance ID received from the SMF instance 604 (if the SMF instance 604 wants its association with the PDU session to be sticky). Otherwise, it stores the SMF group ID.

In 611, the SMF instance 604 sends a create SM context response message to the AMF instance 602. It includes the SMF address which is either the SMF instance ID (for stickiness) or the SMF group ID (for non-stickiness).

In 612, the AMF instance 602 stores the association between PDU session ID and the SMF address received from the SMF instance 604.

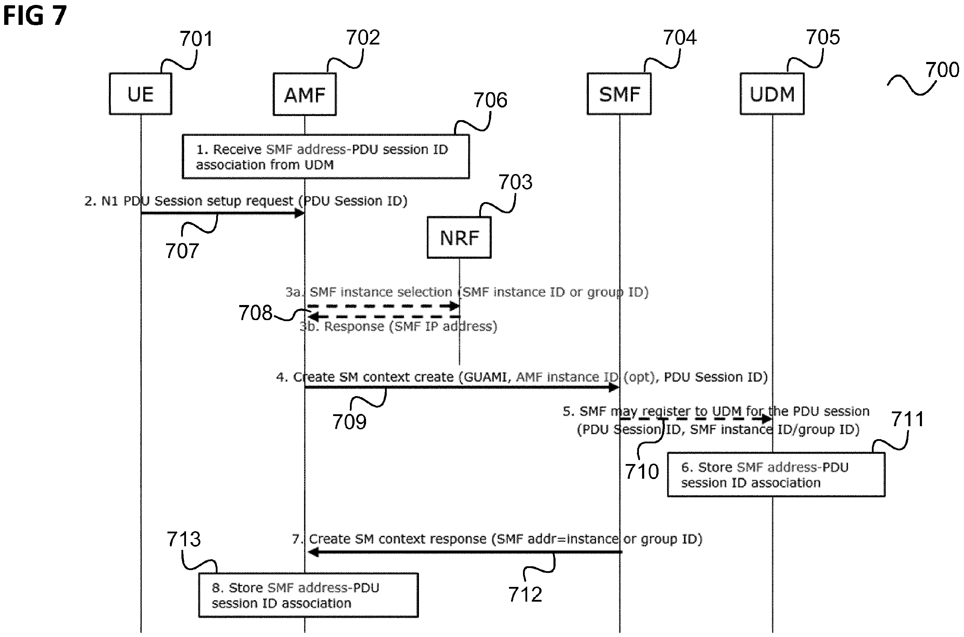

Figure 7 shows a message flow diagram 700 illustrating a procedure for PDU session setup in case of a handover, e.g. following a mobility procedure from an EPC (Evolved Packet Core) or following a non-3GPP access.

The message flow takes place between a UE 701, an AMF instance 702, an NRF 703, an SMF instance 704 and an UDM 705.

In 706, the AMF instance 702 retrieves the SMF address from the UDM 705, which is either the SMF instance ID or the SMF group ID.

In 707, the UE 701 sends a PDU Session setup request to the AMF instance 702.

In 708, the AMF instance 702 resolves the SMF address by querying the NRF 703. For this, the AMF instance 702 performs an SMF instance selection (wherein it indicates the SMF instance ID or the SMF group ID) by means of the NRF 703 which provides the IP address of the SMF instance 704.

In 709, the AMF instance 702 sends a create SM context request to the SMF instance 704. In this message, the AMF instance 702 may indicate the AMF instance ID to the SMF 704 if it wants its association with the PDU session to be sticky.

The SMF instance 704 may, in 710, register with the UDM 705 for the PDU session. The SMF instance 704 may provide the SMF instance ID if it wants its association with the PDU session to be sticky or the SMF group ID if it does not want its association with the PDU session to be sticky.

If the SMF instance 704 wants to change the state of stickiness, it updates the registration in UDM 705 and changes the SMF instance ID to group ID, or vice versa.

In 711, the UDM 705 stores the association between the PDU session ID and the address received from the SMF.

In 712, the SMF instance 704 sends a create SM context response message to the AMF instance 702. It includes the

SMF address which is either the SMF instance ID (for stickiness) or the SMF group ID (for non-stickiness).

In 713, the AMF instance 702 stores the association between PDU session ID and the SMF address received from the SMF instance 704.

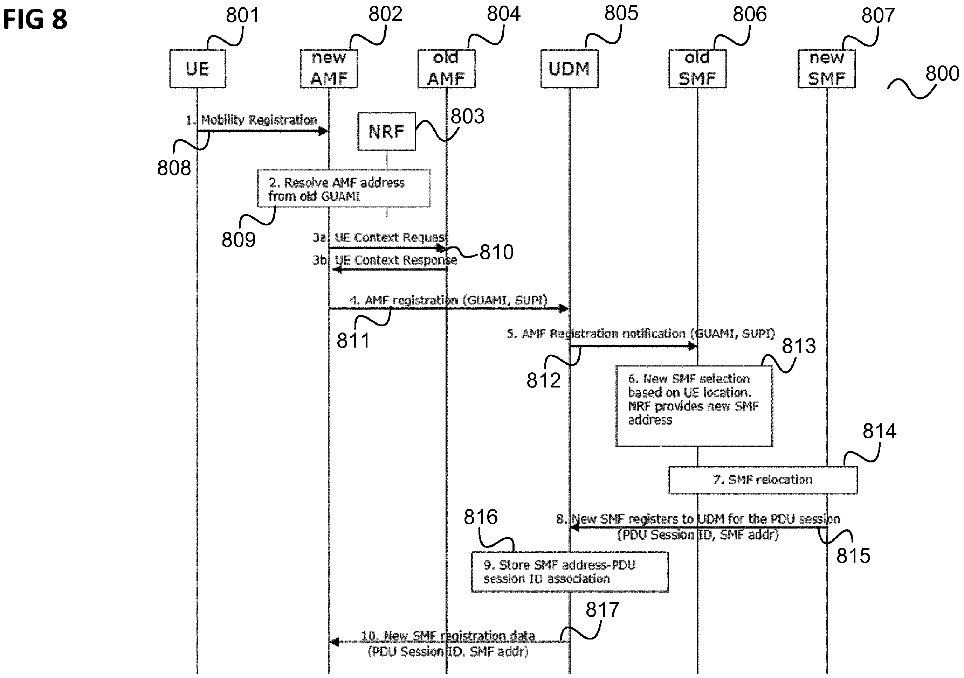

Figure 8 shows a message flow diagram 800 illustrating a mobility registration procedure.

The message flow takes place between a UE 801, a new AMF instance 802, an NRF 803, an old AMF instance 804, a UDM 805, an old SMF instance 806 and new SMF instance 807.

In 808, the UE 801 sends a mobility registration to the new AMF instance 802.

In 809, the new AMF instance 802 resolves the AMF address from the old GUAMI by means of the NRF 803.

In 810, the UE 801 sends a UE Context Request to the old AMF instance 804 which responds with a UE Context Response.

In 811, the new AMF instance 802 sends an AMF registration to the UDM 805.

In 812, the UDM sends an AMF Registration notification to the old SMF instance 806.

In 813, the old SMF instance 806 performs a new SMF selection based on UE location. The NRF 803 provides the new SMF address.

In 814, the old SMF instance 806 performs an SMF relocation with the new SMF instance 807.

In 815, the new SMF instance 807 registers to the UDM 805 for the PDU session providing an SMF address (either instance ID or group ID depending on whether stickiness is desired).

In 816, the UDM 805 stores the association of SMF address and PDU session.

In 817, the UDM 805 sends new SMF registration data including the PDU session ID and the SMF address.

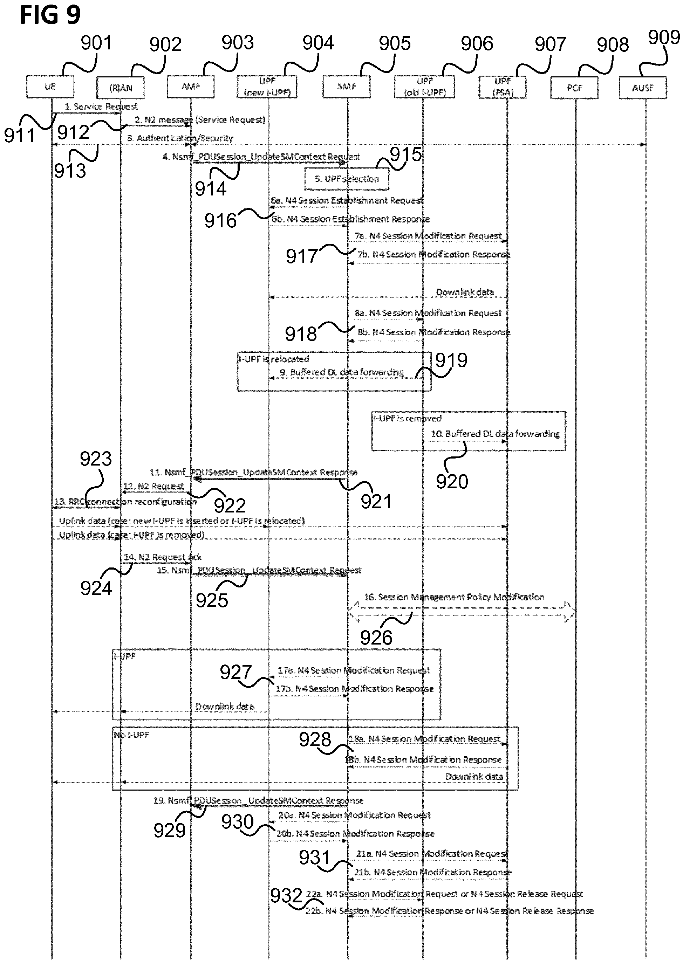

Figure 9 shows a message flow diagram 900 illustrating a service request with a change of stickiness state.

The message flow diagram is a signalling chart showing a Service Request procedure according to 3GPP, supplemented with a change of stickiness state. This procedure is taken as an example where a NF changes its stickiness state in order to handle all the transactions involved in the procedure.

The message flow takes place between a UE 901, a RAN 902, an AMF instance 903, a new UPF 904, an SMF instance 905, an old UPF 906, a PSA (PDU Session Anchor) UPF 907, a PCF (Policy Control Function) 908 and an AUSF (Authentication Server Function) 909.

In 911, the UE sends a service request to the RAN 902 which the RAN 902 forwards to the AMF instance 903 in 912.

In 913, the AMF instance 903 performs an authentication/security procedure for the UE 901 by means of the AUSF 909.

In 914, the AMF instance 903 sends a PDU session update SM context request to the SMF instance 905 (how the SMF instance is discovered and selected is not relevant for the purpose of this example).

In 915, the SMF instance 905 performs a UPF selection.

In 916, the SMF instance 905 sends a session establishment request to the new UPF 904 which responds by means of a session establishment response.

In 917, the SMF 905 sends a session modification request to the PSA UPF 907 which responds by means of a session modification response.

The PSA UPF 907 then provides downlink data to the new UPF 904.

In 918, the SMF instance 905 sends a session modification request to the old UPF 906 which responds with a session modification response.

In 919, if the UPF is relocated (from old UPF 906 to new UPF 904) buffered downlink data is forwarded from the old UPF 906 to the new UPF 904.

In 920, if the old UPF 906 is removed, buffered downlink data is forwarded from the old UPF 906 to the PSA UPF 907.

In 921, the SMF instance 905 sends a response message including its instance ID and a stickiness indication to the AMF instance 903.

914 and 921 form a first transaction.

In 922, the AMF instance 903 sends an N2 request to the RAN 902.

In 923, the RAN 902 performs an RRC (Radio Resource Control) reconfiguration with the UE 901.

Uplink data is then transmitted from the UE 901 via the RAN 902 to the PSA UPF 906.

In 924, the RAN 902 sends an N2 request acknowledgment to the AMF 903.

In 925, due to the stickiness indication received in 921, the AMF instance 903 sends a PDU session update SM context request to the same SMF instance 905 as involved in the first transaction.

In 926, a session management policy modification is performed between the SMF 905 and the PCF 908.

In case of an intermediate UPF, in 927, the SMF instance sends a session modification request to the new UPF 904 which responds with a session modification response. Downlink data is then transmitted from the new UPF 904 to the UE 901 via the RAN 902.

In case of no intermediate UPF, in 928, the SMF instance sends a session modification request to the old UPF 907 which responds with a session modification response. Downlink data is then transmitted from the old UPF 907 to the UE 901 via the RAN 902.

In 929, the SMF instance sends a PDU Session Update SM Context Response message including a non-stickiness indication.

Due to this indication, the AMF instance 903 performs SMF discovery (e.g. as described with reference to figure 5) for any further transaction with an SMF.

925 and 929 form a second transaction.

In 930, the new UPF 904 sends a session modification request to the SMF instance 905 which responds by means of a session modification response.

In 931, the SMF 905 sends a session modification request to the PSA UPF 907 which responds by means of a session modification response.

In 932, the SMF 905 sends a session modification request or a session release request to the old UPF 906 which responds by means of a session modification response or session release response.

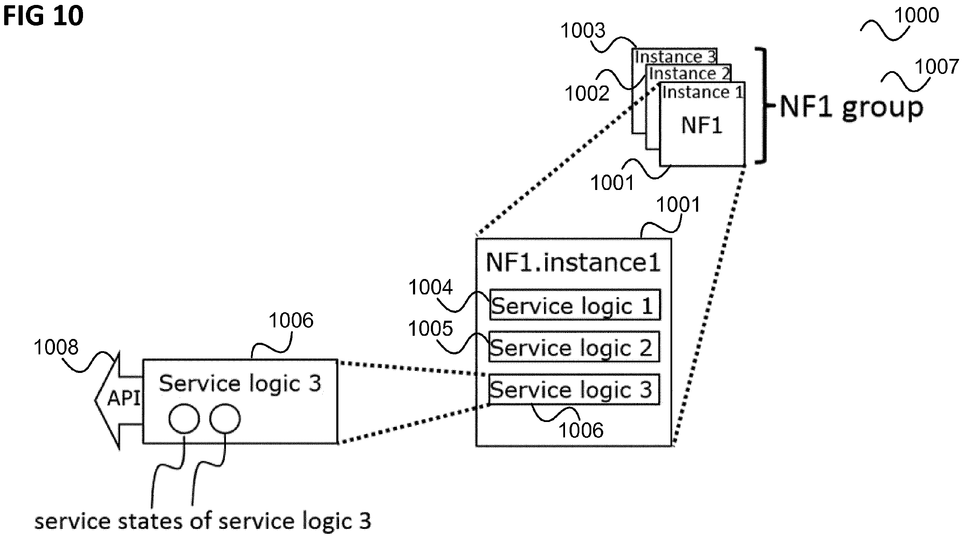

Figure 10 shows a diagram 1000 illustrating the relation between NF instances, service logics and service states.

Each NF instance 1001, 1002, 1003 implements one or more service logics 1004, 1005, 1006.

The NF instances 1001, 1002, 1003 of a NF group 1007 may implement the same service logics 1004, 1005, 1006.

A service logic 1006 exposes one or more APIs (application programming interfaces) 1008 that can be used by service logics of NF instances of other NFs to create, update and delete service states in the service logic 1006.

All the NF instances 1001, 1002, 1003 in a NF group 1007 can store the service states of their service logics in a group repository. All the NF instances 1001, 1002, 1003 in a NF group 1007 can retrieve the service states of their service logics from the group repository.

For example, if a first NF instance 1001 "NF1.instance1" stores a service state created by its service logic 3 1006, a second NF instance 1002 "NF1.instance2" can retrieve the state and update or delete it in its service logic 3.

A service logic performs specific network operations e.g. as defined by 3GPP. A service logic 1004, 1005, 1006 may for example perform the control of a communication session.

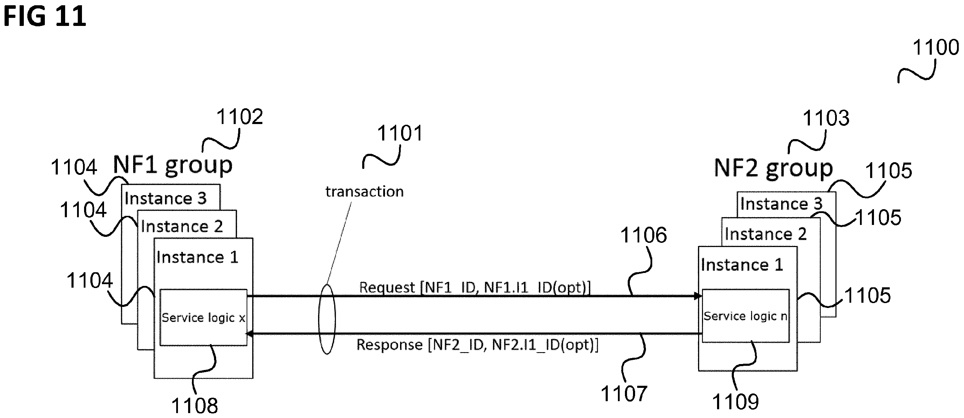

Figure 11 shows a diagram 1100 illustrating a transaction between network functions.

A transaction 1101 is performed between two NFs 1102, 1103 in the 5G Core Network, NF service provider 1103 and NF service consumer 1102, each NF 1102, 1103 consisting of one or more NF instances 1104, 1105.

The transaction 1101 consists of a request 1106 from a service logic (or service entity) 1108 of the first instance 1104 of NF service consumer to a service logic 1109 of the first instance 1105 of NF service provider and a response 1107 from the service logic 1109 of the first instance 1105 of NF service provider to the service logic 1108 of the first instance of NF service consumer 1104. The transaction request 1106 includes an identifier of the group (or set) of NF service consumer instances and optionally an identifier of the first NF service consumer instance 1104 and optionally an identifier of the service logic 1108.

The transaction response 1107 includes an identifier of the set of NF service provider instances and optionally an identifier of the second NF service provider instance 1105 and optionally an identifier of the service logic 1109.

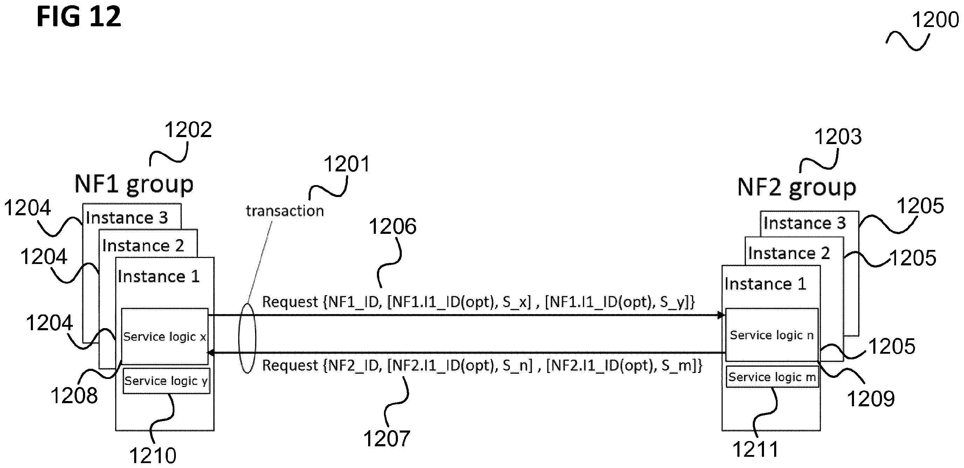

Figure 12 shows a diagram 1200 illustrating a transaction between network functions with multiple service logics in one network function instance.

Similarly to figure 11, a transaction 1201 is performed between two NFs 1202, 1203, NF service provider 1203 and NF service consumer 1202, each NF 1202, 1203 consisting of one or more NF instances 1204, 1205.

The transaction 1201 consists of a request 1206 from a first service logic 1208 of a first instance 1204 of NF service consumer to a first service logic 1209 of a first instance 1205 of NF service provider and a response 1207 from the first service logic 1209 of the first instance 1205 of NF service provider to the first service logic 1208 of the first instance of NF service consumer 1204.

The first instance 1204 of the NF service consumer 1202 further includes a second service logic 1210 and the first instance 1205 of the NF service provider 1203 further includes a second service logic 1211.

The transaction request 1206 includes an identifier of the set of NF service consumer instances and optionally an identifier of the first NF service consumer instance 1204 and optionally an identifier of the first service logic 1208 or the second service logic 1210.

The transaction response 1207 includes an identifier of the set of NF service provider instances and optionally an identifier of the second NF service provider instance 1205 and optionally an identifier of the first service logic 1209 or the second service logic 1211.

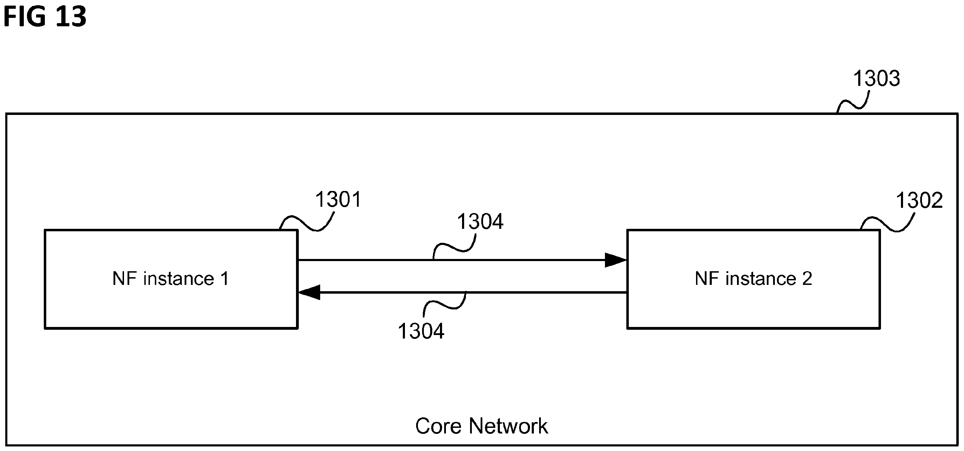

In summary, according to various embodiments, a network function instance is provided as illustrated in figure 13.

Figure 13 shows an instance 1301 of a (first) network function of a communication system core network 1303.

The instance of the network function 1301 is configured to perform one or more transactions 1304 with an instance of another network function of the communication system core network 1303, for example for controlling a communication session.

One of the one or more transactions 1304, 1305 includes indicating to the instance of the other network function 1302 whether the instance of the network function 1301 should be contacted to perform one or more future transactions (e.g. for controlling the communication session) or whether another instance of the network function may be contacted to perform the one or more future transactions.

In other words, according to various embodiments, a service logic in a network function instance, e.g. the communication service logic of an AMF instance or the session service logic in an SMF instance (or both), indicates (e.g. in a service request or in a response to a service request) whether it wishes to remain sticky for further transactions. This may mean that is to be contacted to perform further (i.e. future) transactions or, in other words, that is serves the further transactions, e.g. receives the further transactions, e.g. from the other network instance.

Thus, for example, interactions between communication service logic of an AMF and the session service logic of an SMF are performed which allow the service logics of AMF and SMF to control whether their association is sticky or not. This in particular allows non-sticky interaction between the service logics. During a transaction, a service logic of an AMF instance may indicate to the service logic of an SMF a sticky association with other service logics of the AMF instance. When initiating transactions with said service logics of the AMF, the service logic of the SMF will refer to said service logics of the AMF instance. Another example of interaction that may require stickiness indication is the interaction between service logics in SMF and PCF to retrieve policies.

In particular, the approach of figure 13 allows a non-sticky interaction between an AMF instance and an SMF instance in order to realize requirements for a cloud-native 5GC.

The one of the one or more transactions which includes indicating to the instance of the other network function whether the instance of the network function 1301 should be contacted to perform one or more future transactions or whether another instance of the network function may be contacted to perform the one or more future transactions may for example be a first transaction originated by the first network function. The other network function instance may in the same or in another transaction indicate to the instance of the network function whether the instance of the other network function should be contacted to perform the one or more future transactions or whether another instance of the other network function may be contacted to perform the one or more future transactions. In other words, both network function instances may indicate whether they want to be sticky in the same or in different transactions.

Each transaction (including the one or more future transactions) may for example include one or more message exchanges between the network function instances 1301, 1302 such as requests, acknowledgements, responses, queries etc. Performing a transaction may include serving a transaction originated by an instance of the other network function.

The network function instances may for example be implemented by one or more processors. A "processor" may be understood as any kind of a logic implementing entity, which may be special purpose circuitry or a processor executing software stored in a memory, firmware, or any combination thereof. Thus a "processor" may be a hard-wired logic processor or a programmable logic processor such as a programmable processor, e.g. a microprocessor. A " processor" may also be a processor executing software, e.g. any kind of computer program. Any other kind of implementation of the respective functions which will be described in more detail below may also be understood as a " processor".

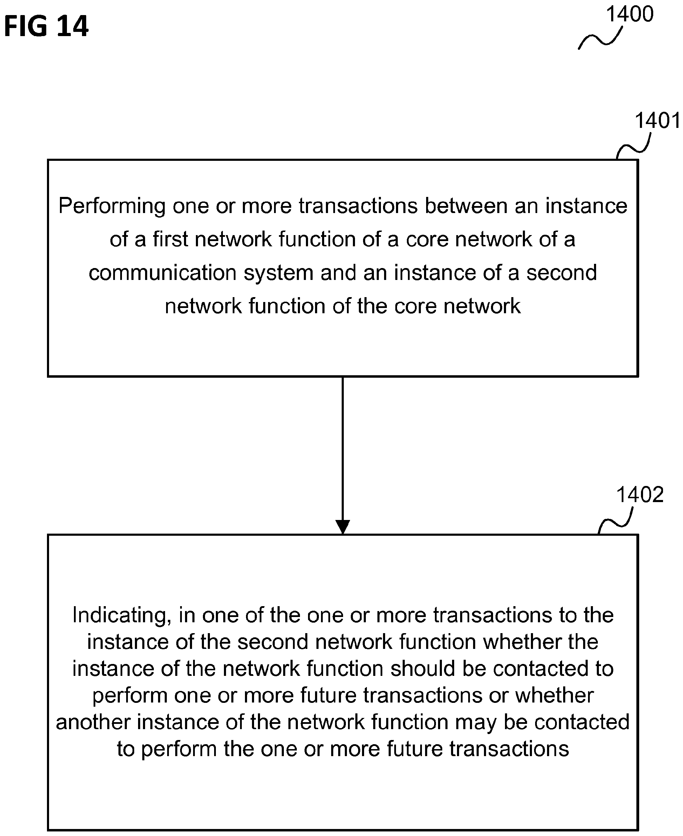

Figure 14 shows a flow diagram 1400 illustrating a method for performing communication transactions.

In 1401, one or more transactions are performed between an instance of a first network function of a core network of a communication system and an instance of a second network function of the core network.

In 1402, it is indicated in one of the one or more transactions to the instance of the other network function whether the instance of the network function should be contacted to perform one or more future transactions or whether another instance of the network function may be contacted to perform the one or more future transactions.

The various involved communication system components (in particular the network function instances) may for example be implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions which will be described in more detail below may also be understood as a "circuit".

Various examples are described below:
Example 1 is an instance of a network function as illustrated in figure 13.
Example 2 is the instance of a network function according to claim 1, wherein the one of the one or more transactions comprises a request to the instance of the other network function instance which indicates to the instance of the other network function whether the instance of the network function should be contacted to perform one or more future transactions or whether another instance of the network function may be contacted to perform the one or more future transactions.
Example 3 is the instance of a network function according to claim 1 or 2, wherein the one of the one or more transactions or another one of the one or more transactions comprises indicating to the instance of the network function whether the instance of the other network function should be contacted to perform the one or more future transactions or whether another instance of the other network function may be contacted to perform the one or more future transactions.
Example 4 is the instance of a network function according to claim 3, wherein the one of the one or more transactions or the other one of the one or more transactions comprises a response to a request of the instance of the network function which indicates to the instance of the network function whether the instance of the other network function should be contacted to perform the one or more future transactions or whether another instance of the other network function may be contacted to perform the one or more future transactions.
Example 5 is the instance of a network function according to any one of claims 1 to 4, wherein the one of the one or more transactions is a create session management context request message, a create session management context response message, an update session management context request message or an update session management context response message.
Example 6 is the instance of a network function according to any one of claims 1 to 5, wherein the one of the one or more transactions indicates to the instance of the other network function that the instance of the network function should be contacted to perform one or more future transactions by specifying an identification of the instance of the network function as address of the network function.
Example 7 is the instance of a network function according to any one of claims 1 to 5, wherein the one of the one or more transactions indicates to the instance of the other network function that the instance of the network function should be contacted to perform one or more future transactions and includes a validity time indicating for how long it is valid that the instance of the network function should be contacted to perform one or more future transactions.
Example 8 is the instance of a network function according to any one of claims 1 to 5, wherein the one of the one or more transactions indicates to the instance of the other network function that another instance of the network function may be contacted to perform the one or more future transactions by specifying an identification of a group of instances of the network function as address of the network function.
Example 9 is the instance of a network function according to any one of claims 1 to 8, wherein the one of the one or more transactions indicates to the instance of the other network function whether the instance of the network function should be contacted to perform one or more future transactions or whether another instance of the network function may be contacted to perform the one or more future transactions by means of an explicit stickiness indication.
Example 10 is the instance of a network function according to any one of claims 1 to 9, wherein one of the one or more transactions comprises indicating to the instance of the other network function that the instance of the network function should be contacted to perform one or more future transactions and one of the one or more future transactions comprises indicating to the instance of the other network function that another instance of the network function may be contacted to perform one or more further future transactions.
Example 11 is the instance of a network function according to any one of claims 1 to 10, wherein the communication system core network is a core network of a 5G communication system.
Example 12 is the instance of a network function according to any one of claims 1 to 11, wherein the network function is an Access and Mobility Management Function and the other network function is a Session Management Function or wherein the network function is a Session Management Function and the other network function is an Access and Mobility Management Function.
Example 13 is the instance of a network function according to any one of claims 1 to 12, comprising a service logic configured to perform the one or more transactions with a service logic of the instance of the other network function.
Example 14 is the instance of a network function according to claim 13, wherein the one of the one or more transactions comprises indicating to the service logic of the instance of the other network function whether the service logic of the instance of the network function should be contacted to perform one or more future transactions or whether a corresponding service logic within another instance of the network function may be contacted to perform the one or more future transactions.
Example 15 is the instance of a network function according to claim 13 or 14, wherein the one or more transactions and the one or more future transactions are related to controlling one or more communication sessions.
Example 16 is the instance of a network function according to any one of claims 13 to 15, wherein the one of the one or more transaction indicates to the service logic of the instance of the other network function that one or more other service logics of the instance of the network function should be used to perform the one or more future transactions.
Example 17 is a method for performing communication transactions as illustrated in figure 14.
Example 18 is the method according to claim 17, wherein the one of the one or more transactions comprises a request to the instance of the second network function which indicates to the instance of the first network function whether the instance of the first network function should be contacted to perform one or more future transactions or whether another instance of the first network function may be contacted to perform the one or more future transactions.
Example 19 is the method according to claim 17 or 18, wherein the one of the one or more transactions or another one of the one or more transactions comprises indicating to the instance of the first network function whether the instance of the second network function should be contacted to perform the one or more future transactions or whether another instance of the second network function may be contacted to perform the one or more future transactions.
Example 20 is the method according to claim 19, wherein the one of the one or more transactions or the other one of the one or more transactions comprises a response to a request of the instance of the first network function which indicates to the instance of the first network function whether the instance of the second network function should be contacted to perform the one or more future transactions or whether another instance of the second network function may be contacted to perform the one or more future transactions.
Example 21 is the method according to any one of claims 17 to 20, wherein the one of the one or more transactions is a create session management context request message, a create session management context response message, an update session management context request message or an update session management context response message.
Example 22 is the method according to any one of claims 17 to 21, wherein the one of the one or more transactions indicates to the instance of the second network function that the instance of the first network function should be contacted to perform one or more future transactions by specifying an identification of the instance of the first network function as address of the first network function.
Example 23 is the method according to any one of claims 17 to 21, wherein the one of the one or more transactions indicates to the instance of the second network function that the instance of the first network function should be contacted to perform one or more future transactions and includes a validity time indicating for how long it is valid that the instance of the first network function should be contacted to perform one or more future transactions.
Example 24 is the method according to any one of claims 17 to 21, wherein the one of the one or more transactions indicates to the instance of the second network function that another instance of the first network function may be contacted to perform the one or more future transactions by specifying an identification of a group of instances of the first network function as address of the first network function.
Example 25 is the method according to any one of claims 17 to 24, wherein the one of the one or more transactions indicates to the instance of the second network function whether the instance of the first network function should be contacted to perform one or more future transactions or whether another instance of the first network function may be contacted to perform the one or more future transactions by means of an explicit stickiness indication.
Example 26 is the method according to any one of claims 17 to 26, wherein one of the one or more transactions comprises indicating to the instance of the second network function that the instance of the first network function should be contacted to perform one or more future transactions and one of the one or more future transactions comprises indicating to the instance of the second network function that another instance of the first network function may be contacted to perform one or more further future transactions.
Example 27 is the method according to any one of claims 17 to 26, wherein the communication system core network is a core network of a 5G communication system.
Example 28 is the method according to any one of claims 17 to 27, wherein the first network function is an Access and Mobility Management Function and the second network function is a Session Management Function or wherein the network function is a Session Management Function and the second network function is an Access and Mobility Management Function.
Example 29 is the method according to any one of claims 17 to 28, wherein the instance of the first network function comprises a service logic configured to perform the one or more transactions with a service logic of the instance of the second network function.
Example 30 is the method according to claim 29, wherein the one of the one or more transactions comprises indicating to the service logic of the instance of the second network function whether the service logic of the instance of the first network function should be contacted to perform one or more future transactions or whether a corresponding service logic within another instance of the first network function may be contacted to perform the one or more future transactions.
Example 31 is the method according to claim 29 or 30, wherein the one or more transactions and the one or more future transactions are related to controlling one or more communication sessions.
Example 32 is the method according to any one of claims 29 to 31, wherein the one of the one or more transaction indicates to the service logic of the instance of the second network function that one or more other service logics of the instance of the first network function should be used to perform the one or more future transactions. While specific aspects have been described, it should be understood by those skilled in the art that various changes in form and detail may be made therein without departing from the scope of the aspects of this disclosure as defined by the appended claims. The scope is thus indicated by the appended claims and all changes which come within the meaning and range of equivalency of the claims are therefore intended to be embraced.

## Claims

1. An instance of a network function (202, 1104, 1204, 1301) of a 5G communication system core network configured to perform one or more transactions (1101, 1201, 1304) with an instance of an other network function (201, 1105, 1205, 1302) of the communication system core network related to a context of a radio communication terminal device and to a request/response exchange (1106, 1107, 1206, 1207) between the instance of the network function (202, 1104, 1204, 1301) and the instance of the other network function (201, 1105, 1205, 1302);
wherein one of the one or more transactions (1101, 1201, 1304) comprises one of a stickiness indication and a non-stickiness indication, wherein the stickiness indication is an identification of the instance of the network function (202, 1104, 1204, 1301) as address of the network function, indicating to the instance of the other network function (201, 1105, 1205, 1302) that the instance of the network function (202, 1104, 1204, 1301) must be contacted to perform one or more future transactions related to the context of the radio communication terminal device, and the non-stickiness indication is an identification of a group of instances of the network function (1102, 1202) as address of the network function, indicating to the instance of the other network function (201, 1105, 1205, 1302) that any instance from the group of instances of the network function (1102, 1202) is to be contacted to perform the one or more future transactions.

2. The instance of a network function (202, 1104, 1204, 1301) according to claim 1, wherein the one of the one or more transactions (1101, 1201, 1304) comprises a request to the instance of the other network function instance (201, 1105, 1205, 1302) which comprises the one of a stickiness indication and a non-stickiness indication indicating to the instance of the other network function (201, 1105, 1205, 1302) if the instance of the network function (202, 1104, 1204, 1301) must be contacted to perform one or more future transactions or if any instance from a group of instances of the network function (1102, 1202) is to be contacted to perform the one or more future transactions.

3. The instance of a network function (202, 1104, 1204, 1301) according to claims 1 or 2, wherein the one of the one or more transactions (1101, 1201, 1304) or another one of the one or more transactions (1101, 1201, 1304) comprises a response to a request of the instance of the network function (202, 1104, 1204, 1301) which comprises the one of a stickiness indication and a non-stickiness indication indicating to the instance of the network function (202, 1104, 1204, 1301) if the instance of the other network function (201, 1105, 1205, 1302) must be contacted to perform the one or more future transactions or if any instance from a group of instances of the other network function (1103,1203) is to be contacted to perform the one or more future transactions.

4. The instance of a network function (202, 1104, 1204, 1301) according to any one of claims 1 to 3, wherein the one of the one or more transactions (1101, 1204, 1304) is a create session management context request message, a create session management context response message, an update session management context request message or an update session management context response message.

5. The instance of a network function (202, 1104, 1204, 1301) according to any one of claims 1 to 4, wherein the one of the one or more transactions (1101, 1201, 1304) indicates to the instance of the other network function (201, 1105, 1205, 1302) that the instance of the network function (202, 1104, 1204, 1301) must be contacted to perform one or more future transactions and includes a validity time indicating for how long it is valid that the instance of the network function (202, 1104, 1204, 1301) must be contacted to perform one or more future transactions.

6. The instance of a network function (202, 1104, 1204, 1301) according to any one of claims 1 to 5, comprising a service logic (1108, 1208, 1210) configured to perform the one or more transactions (1101, 1304) with a service logic (1109, 1209, 1211) of the instance of the other network function (201, 1105, 1205, 1302).

7. The instance of a network function (202, 1104, 1204, 1301) according to claim 6, wherein the one of the one or more transactions (1101, 1204, 1304) comprises a stickiness indication indicating to the service logic (1109, 1209, 1211) of the instance of the other network function (201, 1105, 1205, 1302) if the service logic (1108, 1208, 1210) of the instance of the network function (202, 1104, 1204, 1301) must be contacted to perform one or more future transactions or if a corresponding service logic within a group of instances of the network function (1102, 1202) is to be contacted to perform the one or more future transactions.

8. The instance of a network function (202, 1104, 1204, 1301) according to claim 6 or 7, wherein the one or more transactions (1101, 1204, 1304) and the one or more future transactions are related to controlling one or more communication sessions.

9. The instance of a network function (202, 1104, 1204, 1301) according to any one of claims 6 to 8, wherein the one of the one or more transaction (1101, 1204, 1304) indicates to the service logic (1109, 1209, 1211) of the instance of the other network function (201, 1105, 1205, 1302) that one or more other service logics (1208, 1210) of the instance of the network function (202, 1104, 1204, 1301) must be used to perform the one or more future transactions.

10. A method for performing communication transactions related to a context of a radio communication terminal device and to a request/response exchange between an instance of a network function (202, 1104, 1204, 1301) and an instance of an other network function (201, 1105, 1205, 1302), and carried out in a mobile radio communication system, comprising
performing one or more transactions (1101, 1201, 1304) between an instance of a first network function (202, 1104, 1204, 1301) of a core network of a 5G communication system and an instance of a second network function of the core network; and
providing one of a stickiness indication and a non-stickiness indication in one of the one or more transactions (1101, 1201, 1304), wherein
the stickiness indication is an identification of the instance of the first network function (202, 1104, 1204, 1301) as address of the network function, indicating to the instance of the second network function (201, 1105, 1205, 1302) that the instance of the first network function (202, 1104, 1204, 1301) must be contacted to perform one or more future transactions related to the context of the radio communication terminal device, and
the non-stickiness indication is an identification of a group of instances of the first network function (1102, 1202) as address of the network function, indicating to the instance of the second network function (201, 1105, 1205, 1302) that any instance from the group of instances of the first network function (1102, 1202) is to be contacted to perform the one or more future transactions.

## Patentansprüche

1. Eine Instanz einer Netzwerkfunktion (202, 1104, 1204, 1301) eines 5G-Kommunikationssystem-Kernnetzwerkes, die konfiguriert ist eine oder mehrere Transaktionen (1101, 1201, 1304) mit einer Instanz einer anderen Netzwerkfunktion (201, 1105, 1205, 1302) des Kommunikationssystems-Kernnetzwerkes auszuführen, wobei sich die eine oder mehrere Transaktionen auf einen Kontext eines Funk-Kommunikationsendgerätes und auf einen Anfrage/Antwort-Austausch (1106, 1107, 1206, 1207) zwischen der Instanz der Netzwerkfunktion (202, 1104, 1204, 1301) und der Instanz der anderen Netzwerkfunktion (201, 1105, 1205, 1302) beziehen; wobei eine der einen oder mehreren Transaktionen (1101, 1201, 1304) entweder eine Stickiness-Angabe oder eine Nicht-Stickiness-Angabe enthält, wobei die Stickiness-Angabe eine Identifikation der Instanz der Netzwerkfunktion (202, 1104, 1204, 1301) als Adresse der Netzwerkfunktion ist, die der Instanz der anderen Netzwerkfunktion (201, 1105, 1205, 1302) anzeigt, dass die Instanz der Netzwerkfunktion (202, 1104, 1204, 1301) von der Instanz der anderen Netzwerkfunktion (201, 1105, 1205, 1302) kontaktiert werden muss, um eine oder mehrere zukünftige Transaktionen auszuführen, die sich auf den Kontext des Funk-Kommunikationsendgerätes beziehen, und die Nicht-Stickiness-Angabe eine Identifikation einer Gruppe von Instanzen der Netzwerkfunktion (1102, 1202) als Adresse der Netzwerkfunktion ist, die der Instanz der anderen Netzwerkfunktion (201, 1105, 1205, 1302) anzeigt, dass irgendeine Instanz aus der Gruppe von Instanzen der Netzwerkfunktion (1102, 1202) zu kontaktieren ist, um die eine oder mehrere zukünftige Transaktionen auszuführen.

2. Die Instanz einer Netzwerkfunktion (202, 1104, 1204, 1301) gemäß Anspruch 1, wobei die eine der einen oder mehreren Transaktionen (1101, 1201, 1304) eine Anfrage an die Instanz der anderen Netzwerkfunktionsinstanz (201, 1105, 1205, 1302) enthält, die eine Stickiness-Angabe oder eine Nicht-Stickiness-Angabe enthält, die der Instanz der anderen Netzwerkfunktion (201, 1105, 1205, 1302) anzeigt, ob die Instanz der Netzwerkfunktion (202, 1104, 1204, 1301) kontaktiert werden muss, um eine oder mehrere zukünftige Transaktionen auszuführen, oder ob irgendeine Instanz aus einer Gruppe von Instanzen der Netzwerkfunktion (1102, 1202) zu kontaktieren ist um die eine oder mehrere zukünftige Transaktionen auszuführen.

3. Die Instanz einer Netzwerkfunktion (202, 1104, 1204, 1301) gemäß Anspruch 1 oder 2, wobei die eine der einen oder mehreren Transaktionen (1101, 1201, 1304) oder eine andere der einen oder mehreren Transaktionen (1101, 1201, 1304) eine Antwort auf eine Anfrage der Instanz der Netzwerkfunktion (202, 1104, 1204, 1301) enthält, die eine Stickiness-Angabe oder eine Nicht-Stickiness-Angabe enthält, die der Instanz der Netzwerkfunktion (202, 1104, 1204, 1301) anzeigt, ob die Instanz der anderen Netzwerkfunktion (201, 1105, 1205, 1302) kontaktiert werden muss, um die eine oder mehrere zukünftige Transaktionen auszuführen, oder ob irgendeine Instanz aus einer Gruppe von Instanzen der anderen Netzwerkfunktion (1103, 1203) kontaktiert werden muss, um die eine oder mehrere zukünftige Transaktionen auszuführen.

4. Die Instanz einer Netzwerkfunktion (202, 1104, 1204, 1301) gemäß einem der Ansprüche 1 bis 3, wobei die eine der einen oder mehreren Transaktionen (1101, 1204, 1304) eine Sitzungs-Management-Kontext-Erzeugung-Anforderung(create session management context request)-Nachricht, eine Sitzungs-Management-Kontext-Erzeugung-Antwort(create session management context response Nachricht), eine Sitzungs-Management-Kontext-Aktualisierung-Anforderung(update session management context request)-Nachricht oder eine Sitzungs-Management-Kontext-Aktualisierung-Antwort(update session management context response)-Nachricht ist.

5. Die Instanz einer Netzwerkfunktion (202, 1104, 1204, 1301) gemäß einem der Ansprüche 1 bis 4, wobei die eine der einen oder mehreren Transaktionen (1101, 1201, 1304) der Instanz der anderen Netzwerkfunktion (201, 1105, 1205, 1302) anzeigt, dass die Instanz der Netzwerkfunktion (202, 1104, 1204, 1301) kontaktiert werden muss, um eine oder mehrere zukünftige Transaktionen auszuführen, und eine Gültigkeitsdauer enthält, die anzeigt, für wie lange es gültig ist, dass die Instanz der Netzwerkfunktion (202, 1104, 1204, 1301) kontaktiert werden muss.

6. Die Instanz einer Netzwerkfunktion (202, 1104, 1204, 1301) gemäß einem der Ansprüche 1 bis 5, die eine Service-Logik (1108, 1208, 1210) enthält, wobei die Service-Logik konfiguriert ist, um die eine oder mehrere Transaktionen (1101, 1304) mit einer Service-Logik (1109, 1209, 1211) der Instanz der anderen Netzwerkfunktion (201, 1105, 1205, 1302) auszuführen.

7. Die Instanz einer Netzwerkfunktion (202, 1104, 1204, 1301) gemäß Anspruch 6, wobei die eine der einen oder mehreren Transaktionen (1101, 1204, 1304) eine Stickiness-Angabe enthält, die der Service-Logik (1109, 1209, 1211) der Instanz der anderen Netzwerkfunktion (201, 1105, 1205, 1202) anzeigt, ob die Service-Logik (1108, 1208, 1210) der Instanz der Netzwerkfunktion (202, 1104, 1204, 1301) kontaktiert werden muss, um eine oder mehrere zukünftige Transaktionen auszuführen, oder ob eine korrespondierende Service-Logik innerhalb einer Gruppe von Instanzen der Netzwerkfunktion (1102, 1202) zu kontaktieren ist, um die eine oder mehrere zukünftige Transaktionen auszuführen.

8. Die Instanz einer Netzwerkfunktion (202, 1104, 1204, 1301) gemäß Anspruch 6 oder 7, wobei die eine oder mehrere Transaktionen (1101, 1204, 1304) und die eine oder mehrere zukünftigen Transaktionen sich auf die Steuerung einer oder mehrerer Kommunikationssitzungen beziehen.

9. Die Instanz einer Netzwerkfunktion (202, 1104, 1204, 1301) gemäß irgendeinem der Ansprüche 6 bis 8, wobei die eine der einen oder mehreren Transaktionen (1101, 1204, 1304) der Service-Logik (1109, 1209, 1211) der Instanz der anderen Netzwerkfunktion (201, 1105, 1205, 1302) anzeigt, dass eine oder mehrere andere Service-Logiken (1208, 1210) der Instanz der Netzwerkfunktion (202, 1104, 1204, 1301) verwendet werden müssen, um die eine oder mehrere zukünftige Transaktionen auszuführen.

10. Verfahren zum Ausführen von Kommunikationstransaktionen, die sich auf einen Kontext eines Funk-Kommunikationsendgerätes und auf einen Anfrage/Antwort-Austausch zwischen einer Instanz einer Netzwerkfunktion (202, 1104, 1204, 1301) und einer Instanz einer anderen Netzwerkfunktion (201, 1105, 1205, 1302) beziehen, und in einem mobilen Funk-Kommunikationssystem ausgeführt werden, aufweisend
Ausführen einer oder mehrerer Transaktionen (1101, 1201, 1304) zwischen einer Instanz einer ersten Netzwerkfunktion (202, 1104, 1204, 1301) eines Kernnetzwerkes eines 5G-Kommunikationssystems und einer Instanz einer zweiten Netzwerkfunktion des Kernnetzwerkes; und
Bereitstellen entweder einer Stickiness-Angabe oder einer Nicht-Stickiness-Angabe in einer der einen oder mehreren Transaktionen (1101, 1201, 1304), wobei die Stickiness-Angabe eine Identifikation der Instanz der ersten Netzwerkfunktion (202, 1104, 1204, 1301) als Adresse der Netzwerkfunktion ist, die der Instanz der zweiten Netzfunktion (201, 1105, 1205, 1302) anzeigt, dass die Instanz der ersten Netzwerkfunktion (202, 1104, 1204, 1301) kontaktiert werden muss, um eine oder mehrere zukünftige Transaktionen auszuführen, die sich auf dem Kontext des Funk-Kommunikationsendgerätes beziehen, und die Nicht-Stickiness-Angabe eine Identifikation einer Gruppe von Instanzen der ersten Netzwerkfunktion (1102, 1202) als Adresse der Netzwerkfunktion ist, die der Instanz der zweiten Netzwerkfunktion (201, 1105, 1205, 1302) anzeigt, dass irgendeine Instanz aus der Gruppe von Instanzen der Netzwerkfunktion (1102, 1202) zu kontaktieren ist, um die eine oder mehrere zukünftige Transaktionen auszuführen.

## Revendications

1. Instance d'une fonction de réseau (202, 1104, 1204, 1301) d'un réseau central de système de communication 5G configuré pour effectuer une ou plusieurs transactions (1101, 1201, 1304) avec une instance d'une autre fonction de réseau (201, 1105, 1205, 1302) du réseau central de système de communication en lien avec un contexte d'un dispositif terminal de communication radio et avec un échange demande/réponse (1106, 1107, 1206, 1207) entre l'instance de la fonction de réseau (202, 1104, 1204, 1301) et l'instance de l'autre fonction de réseau (201, 1105, 1205, 1302) ;
dans laquelle la transaction ou l'une de plusieurs transactions (1101, 1201, 1304) comprend une indication parmi une indication d'attractivité et une indication de non-attractivité, dans laquelle l'indication d'attractivité est une identification de l'instance de la fonction de réseau (202, 1104, 1204, 1301) en tant qu'adresse de la fonction de réseau, indiquant à l'instance de l'autre fonction de réseau (201, 1105, 1205, 1302) que l'instance de la fonction de réseau (202, 1104, 1204, 1301) doit être contactée pour effectuer une ou plusieurs transactions futures en lien avec le contexte du dispositif terminal de communication radio, et l'indication de non-attractivité est une identification d'un groupe d'instances de la fonction de réseau (1102, 1202) en tant qu'adresse de la fonction de réseau, indiquant à l'instance de l'autre fonction de réseau (201, 1105, 1205, 1302) que toute instance du groupe d'instances de la fonction de réseau (1102, 1202) doit être contactée pour effectuer la ou les transactions futures.

2. Instance d'une fonction de réseau (202, 1104, 1204, 1301) selon la revendication 1, dans laquelle la transaction ou l'une de plusieurs transactions (1101, 1201, 1304) comprend une demande adressée à l'instance de l'autre instance de fonction de réseau (201, 1105, 1205, 1302) qui comprend une indication parmi une indication d'attractivité et une indication de non-attractivité indiquant à l'instance de l'autre fonction de réseau (201, 1105, 1205, 1302) si l'instance de la fonction de réseau (202, 1104, 1204, 1301) doit être contactée pour effectuer une ou plusieurs transactions futures ou si toute instance d'un groupe d'instances de la fonction de réseau (1102, 1202) doit être contactée pour effectuer la ou les transactions futures.

3. Instance d'une fonction de réseau (202, 1104, 1204, 1301) selon les revendications 1 ou 2, dans laquelle la transaction ou l'une de plusieurs transactions (1101, 1201, 1304) ou une autre de la transaction ou de l'une des plusieurs transactions (1101, 1201, 1304) comprend une réponse à une demande de l'instance de la fonction de réseau (202, 1104, 1204, 1301) qui comprend l'indication parmi une indication d'attractivité et une indication de non-attractivité indiquant à l'instance de la fonction de réseau (202, 1104, 1204, 1301) si l'instance de l'autre fonction de réseau (201, 1105, 1205, 1302) doit être contactée pour effectuer la ou les transactions futures, ou si toute instance d'un groupe d'instances de l'autre fonction de réseau (1103, 1203) doit être contactée pour effectuer la ou les transactions futures.

4. Instance d'une fonction de réseau (202, 1104, 1204, 1301) selon l'une quelconque des revendications 1 à 3, dans laquelle la transaction ou l'une des plusieurs transactions (1101, 1204, 1304) est un message de demande de contexte de gestion de session de création, un message de réponse de contexte de gestion de session de création, un message de demande de contexte de gestion de session d'actualisation ou un message de réponse de contexte de gestion de session d'actualisation.

5. Instance d'une fonction de réseau (202, 1104, 1204, 1301) selon l'une quelconque des revendications 1 à 4, dans laquelle la transaction ou l'une de plusieurs transactions (1101, 1201, 1304) indique à l'instance de l'autre fonction de réseau (201, 1105, 1205, 1302) que l'instance de la fonction de réseau (202, 1104, 1204, 1301) doit être contactée pour effectuer la ou plusieurs transactions futures et inclut un durée de validité indiquant pendant combien de temps il est valide que l'instance de la fonction de réseau (202, 1104, 1204, 1301) doive être contactée pour effectuer la ou plusieurs transactions futures.

6. Instance d'une fonction de réseau (202, 1104, 1204, 1301) selon l'une quelconque des revendications 1 à 5, comprenant une logique de service (1108, 1208, 1210) configurée pour effectuer la ou les transactions (1101, 1304) avec une logique de service (1109, 1209, 1211) de l'instance de l'autre fonction de réseau (201, 1105, 1205, 1302).

7. Instance d'une fonction de réseau (202, 1104, 1204, 1301) selon la revendication 6, dans laquelle la transaction ou l'une de plusieurs transactions (1101, 1204, 1304) comprend une indication d'attractivité indiquant à la logique de service (1109, 1209, 1211) de l'instance de l'autre fonction de réseau (201, 1105, 1205, 1302) si la logique de service (1108, 1208, 1210) de l'instance de la fonction de réseau (202, 1104, 1204, 1301) doit être contactée pour effectuer une ou plusieurs transactions futures ou si une logique de service correspondante à l'intérieur d'un groupe d'instances de la fonction de réseau (1102, 1202) doit être contactée pour effectuer la ou plusieurs transactions futures.

8. Instance d'une fonction de réseau (202, 1104, 1204, 1301) selon la revendication 6 ou 7, dans laquelle la ou les transactions (1101, 1204, 1304) et la ou les transactions futures sont en lien avec la commande d'une ou de plusieurs sessions de communication.

9. Instance d'une fonction de réseau (202, 1104, 1204, 1301) selon l'une quelconque des revendications 6 à 8, dans laquelle la transaction ou l'une de plusieurs transactions (1101, 1204, 1304) indiquent à la logique de service (1109, 1209, 1211) de l'instance de l'autre fonction de réseau (201, 1105, 1205, 1302) qu'une ou plusieurs autres logiques de service (1208, 1210) de l'instance de la fonction de réseau (202, 1104, 1204, 1301) doit/doivent être utilisée(s) pour effectuer la ou les transactions futures.

10. Procédé permettant de réaliser des transactions de communication en lien avec un contexte d'un dispositif terminal de communication radio et avec un échange demande/réponse entre une instance d'une fonction de réseau (202, 1104, 1204, 1301) et une instance d'une autre fonction de réseau (201, 1105, 1205, 1302), et effectuées dans un système de communication radio mobile, comprenant
la réalisation d'une ou de plusieurs transactions (1101, 1201, 1304) entre une instance d'une première fonction de réseau (202, 1104, 1204, 1301) d'un réseau central d'un système de communication 5G et une instance d'un deuxième fonction de réseau du réseau central ; et
la fourniture d'une indication parmi une indication d'attractivité et une indication de non-attractivité dans la transaction ou l'une ou plusieurs transactions (1101, 1201, 1304), dans lequel l'indication d'attractivité est une identification de l'instance de la première fonction de réseau (202, 1104, 1204, 1301) en tant qu'adresse de la fonction de réseau,
l'indication à l'instance de la deuxième fonction de réseau (201, 1105, 1205, 1302) que l'instance de la première fonction de réseau (202, 1104, 1204, 1301) doit être contactée pour effectuer une ou plusieurs transactions futures en lien avec le contexte du dispositif terminal de communication radio, et
l'indication de non-attractivité est une identification d'un groupe d'instances de la première fonction de réseau (1102, 1202) en tant qu'adresse de la fonction de réseau,
l'indication à l'instance de la deuxième fonction de réseau (201, 1105, 1205, 1302) que toute instance du groupe d'instances de la première fonction de réseau (1102, 1202) doit être contactée pour réaliser une ou plusieurs transactions futures.
